# EUROPÄISCHE PATENTSCHRIFT

(11) **EP 1 125 011 B1**
(45) Veröffentlichungstag und Bekanntmachung des Hinweises auf die Patenterteilung: **11.02.2004**
(21) Anmeldenummer: 99969456.5
(22) Anmeldetag: 14.09.1999
(51) Int. Cl.: D01F 2/00, C08J 5/18, C08L 1/02

(54) **VERFAHREN ZUR HERSTELLUNG VON CELLULOSISCHEN FORMKÖRPERN**
METHOD FOR PRODUCING CELLULOSIC FORMS
PROCEDE DE PRODUCTION DE CORPS MOULES CELLULOSIQUES

(30) Priorität: 17.09.1998 DE 19842556
(43) Veröffentlichungstag der Anmeldung: 22.08.2001
(73) Patentinhaber: Zimmer AG, 60388 Frankfurt (DE)
(72) Erfinder: GUNKEL, Holger, D-07407 Rudolstadt (DE); MOOZ, Michael, D-07318 Volkmannsdorf (DE)
(74) Vertreter: Brandenburg, Thomas, Dr.
(86) Internationale Anmeldenummer: PCT/DE1999/002976
(87) Internationale Veröffentlichungsnummer: WO 2000/017424

(56) Entgegenhaltungen:
- WO-A-97/07059
- WO-A-97/07108
- WO-A-97/07138
- WO-A-98/00589

## Beschreibung

Die Erfindung betrifft ein Verfahren zur Herstellung von cellulosischen Formkörpern, wie Fasern, Filamenten, Folien, Membranen oder Schläuchen, bei dem man a) eine Celluloselösung in einem wasserhaltigen Aminoxid, insbesondere N-Methylmorpholin-N-oxid, durch ein Formwerkzeug über einen Luftspalt extrudiert und den Formkörper in einem wässrigen, Aminoxid enthaltenden Fällbad koaguliert, und b) den Formkörper zur Entfernung restlichen Aminoxids durch wenigstens eine Waschstufe führt.

Während das Fällbad üblicherweise Konzentrationen an N-Methylmorpholin-N-oxid (NMMO) von 10 bis 25 Masse-% und Temperaturen von 0 bis 20°C hat, reduziert sich der NMMO-Gehalt in den darauffolgenden Waschstufen bis auf fast 0 % bei Temperaturen bis 80°C. Es ist bekannt, daß diese NMMO-haltigen Flotten durch einen teilweise sehr starken Befall von Mikroorganismen gekennzeichnet sind. Diese biologischen Substanzen sind im wesentlichen Bakterien und Pilze und erzeugen durch Bildung von Schleimaggregaten und Biofilmen erhebliche Schwierigkeiten bei der Prozessführung. Durch Zusetzen von Rohrleitungen, Filtern, Pumpen usw. kann die Funktion dieser Anlagenteile bis hin zu ihrem gänzlichen Ausfall beeinträchtigt werden. Eine mechanische Reinigung der Wasch- und Fällbadsysteme ist aufgrund der ausgeprägten Haftung der polymeren Schleimsubstanzen an jeglichen Oberflächen sehr aufwendig und führt zu unnötigen Unterbrechungen des Produktionsprozesses.

Aus WO 96/18761 ist ein Verfahren bekannt, bei dem durch den Einsatz gebräuchlicher Oxidationsmittel, wie z.B. Wasserstoffperoxid, Peressigsäure, Ozon oder Chlordioxid, die biologischen Substanzen in den Bädern abgebaut werden. Durch einen aufwendigen Mechanismus muß dabei sichergestellt werden, daß diese Oxidationsmittel vor der Rückführung des NMMO in die Spinnlösungsherstellung vollständig beseitigt sind.

Bei dem in WO 97/07137 beschriebenen Verfahren wird zwecks Vermeidung von Belagsbildungen in den Apparaturen vor, während oder nach der Regenerierung aminoxidhaltiger Lösungen ein mikrobizides Mittel zugesetzt. Auch hier besteht der Nachteil, daß sich die zugesetzten Substanzen oder deren Abbauprodukte im NMMO-Kreislauf des Verfahrens anreichern und unerwünschte Wirkungen in einzelnen Verfahrensstufen hervorrufen. Besonders kritisch sind hierbei die Auswirkungen auf die thermische Stabilität des NMMO und das damit verbundene Sicherheitsrisiko zu betrachten.

Aus WO 97/07108 und WO 97/07138 ist die UV-Behandlung aminoxidhaltiger Lösungen bekannt, um während oder nach der Oxidation von N-Methylmorpholin (NMM) zu NMMO das dabei gebildete N-Nitrosomorpholin zu zerstören. Die UV-Behandlung beschränkt sich auf die Regenerierung des Fällbades zwecks Wiederverwendung des regenerierten NMMO für die Bereitung der Spinnlösung.

Der Erfindung liegt die Aufgabe zugrunde, die Bildung und Vermehrung der durch Mikroorganismen gebildeten Beläge, Filme und Schleimaggregate in den mit NMMO-haltigen Flotten in Berührung kommenden Anlageteilen und die dadurch bedingte Beeinträchtigung und Betriebsunterbrechung zu vermeiden. Insbesondere soll das eingangs genannte Verfahren auch im kontinuierlichen Dauerbetrieb keine häufige Reinigung der Anlage erfordern. Ferner soll auf den Einsatz chemischer Stoffe verzichtet werden, um die damit verbundenen Probleme ihrer Überwachung und ggfs. Wiederabtrennung zu vermeiden. Weitere Vorteile ergeben sich aus der folgenden Beschreibung.

Diese Aufgabe wird bei dem eingangs genannten Verfahren erfindungsgemäß dadurch gelöst, daß man die Fällbadflüssigkeit in der Fällstufe und/oder die Waschflüssigkeit der Waschstufe(n) mit einer Hazen-Farbzahl Hz < 400 mit ultravioletter Strahlung behandelt.
Es hat sich überraschenderweise gezeigt, daß die sich in Aminoxid, insbesondere NMMO enthaltenden Flotten entwickelnden Mikroorganismen, die die unerwünschten Ablagerungen zur Folge haben, durch die UV-Strahlung inaktiviert bzw. durch UV induzierte Reaktion ihre DNS (Desoxyribonukleinsäure) abgetötet werden. Im Ergebnis wird die Gesamtkeimzahl in der Flotte niedrig gehalten, und etwaige Reinigungen der Anlage sind erst nach wesentlich längeren Betriebszeiten erforderlich.

Nach der bevorzugten Ausführungsform des erfindungsgemäßen Verfahrens arbeitet man mit einer ultravioletten Strahlung einer Wellenlänge in dem Bereich von 200 bis 280 nm. Insbesondere weist die zum Einsatz kommende UV-Strahlung eine Wellenlänge von 254 nm auf. Zweckmäßigerweise erzeugt man diese Strahlung mit einer Quecksilber-Niederdrucklampe, deren Intensitätsmaximum bei dieser Wellenlänge liegt.

Vorzugsweise beschränkt man die UV-Behandlung auf die Flüssigkeiten der Waschstufe(n) mit einer Temperatur unter 50°C. Wenn man mit mehreren hintereinandergeschalteten Waschstufen arbeitet, erhöht man die Temperatur der Waschflüssigkeit der letzten Stufen häufig über 50°C, um die Auswaschung des Aminoxids aus den Formköpern zu fördern. In diesen Stufen kann auf eine UV-Strahlungsbehandlung verzichtet werden, da sich bei diesen Temperaturen die Mikroorganismen nicht entwickeln können. Andererseits ist das Wachstum der Mikroorganismen bei Temperaturen unter 20°C stark gehemmt. Da die Fällbäder häufig unter dieser Temperatur gehalten werden, kann dann die Bestrahlungsleistung deutlich reduziert werden. Soweit es möglich ist, in den folgenden Waschstufen Temperaturen zwischen 20 und 40°C zu vermeiden, kann auch dort die Bestrahlungsleistung verringert werden.

Die Fällbad- oder Waschflüssigkeiten haben dabei eine Hazen-Farbzahl Hz ≤ 400 der UV-Behandlung. Es hat sich gezeigt, daß stärkere Färbungen der Flotten die Wirksamkeit der UV-Behandlung reduzieren und höhere Strahlungsleistungen erfordern. Bis zu der genanten Hazen-Farbzahl ist die Effektivität der UV-Behandlung gewährleistet. Das Entstehen bzw. Hintanhalten gefärbter Nebenprodukte ist daher abgesehen von anderen Gründen auch bei der erfindungsgemäßen UV-Behandlung der Fällbad- und Waschflüssigkeiten von Vorteil.

Wenn bei dem erfindungsgemäßen Verfahren das Fällbad und mehrere Waschstufen hintereinandergeschaltet sind und eigene Flüssigkeitskreisläufe haben, werden zweckmäßig die Umlaufflüssigkeiten des Fällbades und der ersten Waschstufe(n) mit UV-Strahlung behandelt, da diese Flüssigkeiten vergleichsweise günstige Bedingungen (Temperatur, Gehalt an organischen Stoffen) für die Entwicklung von Mikroorganismen bieten. Da die Flüssigkeit von der letzten Waschstufe entgegen dem Fadenlauf zum Fällbad geführt wird, wird sie auf diesem Wege mehrfach der UV-Strahlung ausgesetzt. Die UV-Bestrahlung in einem Kreislauf kann ununterbrochen oder intermittierend erfolgen. Es ist möglich, die UV-Strahler in einfacher Weise auch in bestehende Anlagen zu integrieren.

Vorzugsweise bestrahlt man die Kreislaufflüssigkeiten mit einer Leistung in dem Bereich von 0,1 bis 1,0 Wh/l, insbesondere mit 0,5 Wh/1. In Abhängigkeit von pH-Wert, Temperatur, NMMO-Konzentration, Sauerstoffeintrag und Lichtdurchlässigkeit (Farbzahl) gestalten sich die Bedingungen für das mikrobiologische Wachstum und die Effektivität seiner Bekämpfung durch UV-Bestrahlung sehr unterschiedlich. Durch die Anpassung der UV-Bestrahlungsleistung und -dauer kann den jeweiligen spezifischen Bedingungen Rechnung getragen werden.

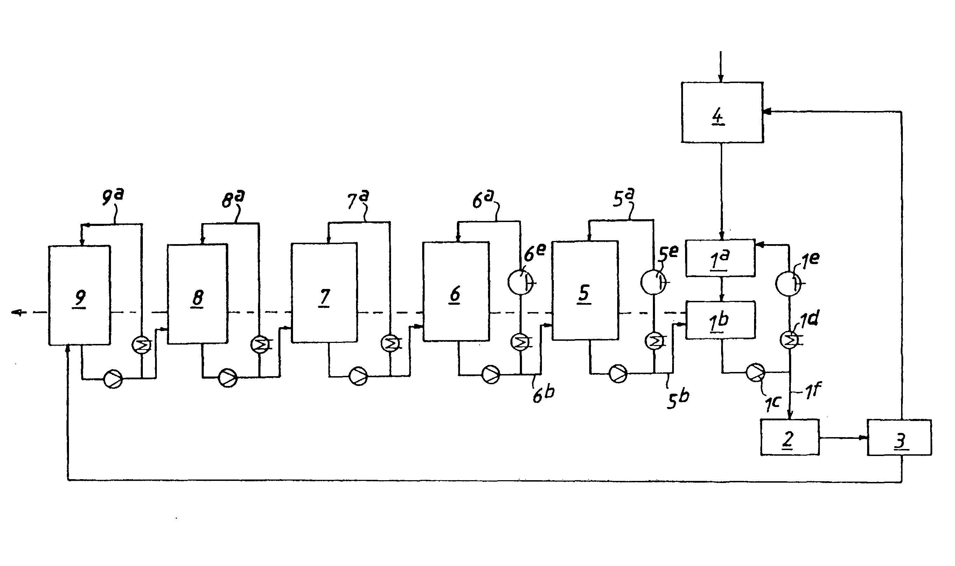

Die Figur zeigt eine schematische Darstellung einer Anlage zur Durchführung des erfindungsgemäßen Verfahrens mit einem Fällbad und einer angeschlossenen fünfstufigen Waschanlage.

Das Fällbad hat einen internen Kreislauf für die Badflüssigkeit von der Auffangwanne 1^{b} zum Spinnkasten 1^{a} mit einer Pumpe 1^{c}, einem Kühler 1^{d} und einem UV-Strahler 1^{e}. Verbrauchtes Fällbad wird durch die Leitung 1^{f} abgezogen und einer Reinigungsstufe 2 zugeführt. Das gereinigte Fällbad wird in der Stufe 3 aufkonzentriert. Das dabei gebildete NMMO-Konzentrat wird in der Stufe 4 zur Herstellung der Spinnlösung eingesetzt, die den Spinndüsen zugepumpt wird. Das in der Stufe 3 gebildete Destillat wird als Waschlüssigkeit der letzten Waschstufe 9 zugeführt.

Die erste Waschstufe 5 hat einen äußeren Waschflüssigkeitskreislauf 5^{a} mit einem UV-Strahler 5^{e}. Aus dem Kreislauf 5^{a} fließt NMMO-haltige Waschflüssigkeit über eine Leitung 5^{b} in die Auffangwanne 1^{b} über. Die zweite Waschstufe 6 ist in der gleichen Weise wie die erste Waschstufe 5 mit einem UV-Strahler 6^{e} versehen. Die weiteren Waschstufen 7, 8 und 9 haben ebenfalls externe Waschmittelkreisläufe 7^{a}, 8^{a} bzw. 9^{a}, die sich von den Kreisläufen 5^{a} und 6^{a} dadurch unterscheiden, daß in ihnen keine UV-Strahler angeordnet sind, da die Waschmitteltemperaturen hier über 50°C gehalten werden. Der Lauf des extrudierten Produkts durch die Anlage ist gestichelt dargestellt.

### Ausführungsbeispiel

In der in der Figur dargestellten Anlage werden die UV-Strahler mit einer Leistung von 0,5 Wh/l zirkulierte Flüssigkeit betrieben. An Proben aus dem Fällbad wurde mittels Nährböden (TTC-Agar) die Gesamtkeimzahl in Zeitabständen von 2 Tagen bestimmt. Die Gesamtkeimzahl lag ständig unter 10⁵/ml. Eine Reinigung war erst nach 2 Monaten erforderlich.

### Vergleichsbeispiel

Bei gleicher Arbeitsweise wie in dem Ausführungsbeispiel, jedoch ohne UV-Bestrahlung ergab sich trotz gründlicher Reinigung und Desinfektion nach 5 Tagen bereits ein Ansteigen der Gesamtkeimzahl auf > 10⁶/ml. Der Reinigungszyklus musste auf 5 Tage verkürzt werden.

## Patentansprüche

1. Verfahren zur Herstellung von cellulosischen Formkörpern, wie Fasern, Filamenten, Folien, bei dem man
a) eine Celluloselösung in einem wasserhaltigen Aminoxid, insbesondere N-Methylmorpholin-N-oxid, durch ein Formwerkzeug über einen Luftspalt extrudiert und den Formkörper in einem wäßrigen, Aminoxid enthaltenden Fällbad koaguliert, und
b) den Formkörper zur Entfernung restlichen Aminoxids durch wenigstens eine Waschstufe leitet, **dadurch gekennzeichnet,**
**daß** man die Fällbadflüssigkeit in der Fällstufe und/oder die Waschflüssigkeit der Waschstufe(n) mit einer Hazen-Farbzahl Hz ≤ 400 mit einer ultravioletten Strahlung behandelt.

2. Verfahren nach Anspruch 1, **dadurch gekennzeichnet, daß** man mit einer ultravioletten Strahlung einer Wellenlänge in dem Bereich von 200 bis 280 nm arbeitet.

3. Verfahren nach Anspruch 2, **dadurch gekennzeichnet, daß** die ultraviolette Strahlung eine Wellenlänge von 254 nm aufweist.

4. Verfahren nach einem der Ansprüche 1 bis 3, **dadurch gekennzeichnet, daß** man die ultraviolette Strahlung durch eine Quecksilber-Niederdrucklampe erzeugt.

5. Verfahren nach einem der Ansprüche 1 bis 4, **dadurch gekennzeichnet, daß** man die UV-Behandlung auf die Flüssigkeiten der Waschstufe(n) mit einer Temperatur unter 50°C beschränkt.

6. Verfahren nach einem der Ansprüche 1 bis 5, bei dem das Fällbad und mehrere Waschstufen hintereinandergeschaltet sind und eigene Flüssigkeitskreisläufe haben, **dadurch gekennzeichnet, daß** die Kreislaufflüssigkeiten des Fällbades und der ersten Waschstufe(n) mit UV-Strahlung behandelt werden kann.

7. Verfahren nach Anspruch 6, **dadurch gekennzeichnet, daß** man die Kreislaufflüssigkeiten mit einer Leistung in dem Bereich von 0,1 bis 1,0 Wh/1 bestrahlt.

## Claims

1. Process for producing formed cellulosic articles, such as fibres, filaments, films, membranes or tubes, comprising
a) extruding a solution of cellulose in an aqueous amine oxide particularly N-methylmorpholine N-oxide, through an extrusion die via an air gap and coagulating the formed article in an aqueous precipitation bath containing amine oxide, and
b) passing the formed article through at least one washing stage for removing residual amine oxide,
**characterized in that** the liquor of the precipitation bath in the precipitation stage and/or the washing liquor of the washing stage(s) having a Hazen colour Hz · 400 is treated with ultra-violet radiation.

2. Process according to claim 1 **characterized in that** an ultra-violet radiation having a wave length in the range from 200 to 280 nm is used.

3. Process according to claim 2 **characterized in that** the ultra-violet radiation has a wave length of 254 nm.

4. Process according to any of the claims 1 to 3 **characterized in that** the ultra-violet radiation is generated by mercury low-pressure lamp.

5. Process according to any of the claims 1 to 4 **characterized in that** the UV treatment is limited to the liquors of the washing stage(s) having a temperature below 50°C.

6. Process according to any of the claims 1 to 5 in which the precipitation bath and several washing stages are connected in series and have liquor cycles of their own, **characterized in that** the cycle liquors of the precipitation bath and the first washing stage(s) can be treated with ultra-violet radiation.

7. Process according to claims 6 **characterized in that** the cyle liquors are irradiated with a power in the range from 0.1 to 1.0 Wh/l.

## Revendications

1. Procédé pour la fabrication de corps de formage cellulosiques tels des fibres, filaments, feuilles, consistant à :
a) extruder une solution de cellulose dans un oxyde d'amine, en particulier un oxyde de N-morpholine de méthyle-N, à l'aide d'un outil de formage via une fente d'aération, et à coaguler le corps de formage dans un liquide de régénération aqueux contenant de l'oxyde d'amine, et
b) diriger le corps de formage à travers au moins une étape de lavage pour éliminer l'oxyde d'amine restant, **caractérisé en ce que**
l'on traite le liquide du bain de régénération dans l'étape de régénération et/ou le liquide de lavage de la/des étape(s) de lavage avec un indice de trouble Hz ≤ 400 avec un rayonnement ultraviolet.

2. Procédé selon la revendication 1, **caractérisé en ce que** l'on travaille avec une irradiation aux ultraviolets d'une longueur d'onde située dans une plage de 200 à 280 nm.

3. Procédé selon la revendication 2, **caractérisé en ce que** le rayonnement ultraviolet présente une longueur d'onde de 254 nm.

4. Procédé selon l'une quelconque des revendication 1 à 3, **caractérisé en ce que** l'on produise le rayonnement ultraviolet avec une lampe à mercure à basse pression.

5. Procédé selon l'une quelconque des revendications 1 à 4, **caractérisé en ce que** l'on limite le traitement UV sur les liquides de la/des étape(s) de lavage avec une température inférieure à 50 °C.

6. Procédé selon l'une quelconque des revendications 1 à 5, avec lequel le bain de régénération et plusieurs étapes de lavage sont montés les uns derrière les autres et possèdent des circuits de liquides propres, **caractérisé en ce que** les liquides des circuits du bain de régénération et de la/des première(s) étape(s) de lavage peuvent être traités par rayonnement ultraviolet.

7. Procédé selon la revendication 6, **caractérisé en ce que** l'on irradie les liquides de circuit avec une puissance dans une plage de 0,1 à 1,0 Wh/l.
